## Europäisches Patentamt

## European Patent Office

## Office européen des brevets

(19)

(11) Veröffentlichungsnummer: **0 185 963**

**B1**

(12) # EUROPÄISCHE PATENTSCHRIFT

(45) Veröffentlichungstag der Patentschrift:
**13.09.89**

(21) Anmeldenummer: **85115178.7**

(22) Anmeldetag: **29.11.85**

(51) Int. Cl.⁴: **C 02 F 1/50, D 21 F 1/66**

(54) Verfahren zur Herabsetzung der Schleimbildung in Anlagen mit einem Wasserkreislauf.

(30) Priorität: **28.12.84 DE 3447686**

(43) Veröffentlichungstag der Anmeldung:
**02.07.86 Patentblatt 86/27**

(45) Bekanntmachung des Hinweises auf die Patenterteilung:
**13.09.89 Patentblatt 89/37**

(84) Benannte Vertragsstaaten:
**AT CH DE FR GB IT LI NL**

(56) Entgegenhaltungen:
CA-A-807 123
DE-A-2 055 292
GB-A-1 222 066
US-A-2 551 446
US-A-3 505 243

ABSTRACT BULLETIN OF THE INSTITUTE OF
PAPER CHEMISTRY, Band 54, Nr. 8, Februar 1984,
Seite 883, Zusammenfassung Nr. 8177, Appleton,
Wisconsin, US; J. OBERKOFLER : "Biochem
process for controlling slime and deposits in the
paper industry", & OESTERR. PAPIER 20, no. 9: 34-
35 (Sept. 1983)(Cat. D)
TAPPI, Band 54, Nr. 10, Oktober 1971, Seiten 1731-
1733, New York, US; C.F. Lo et al.: "Low-molecularweight lignin sulfonates I. Isolation from a
softwood lignin product"
TAPPI, Band 49, Nr. 12, Dezember 1966, Seiten 562-

(73) Patentinhaber: **Oberkofler, Jörg, Dr. Dipl.- Ing.,
Litzlberg 23 A, A-4863 Seewalchen (AT)**

(72) Erfinder: **Oberkofler, Jörg, Dr. Dipl.- Ing., Litzlberg
23 A, A-4863 Seewalchen (AT)**

(74) Vertreter: **Kador & Partner, Corneliusstrasse 15,
D-8000 München 5 (DE)**

(56) Entgegenhaltungen: (Fortsetzung)
564, New York, US; G.R. QUIMBY et al.:
"Fractionation and relative molecular weight
measurements of the quaternary ammonium salts
of lignin sulfonates"
TAPPI, Band 44, Nr. 11, November 1961, Seiten 766-
775, New York, US; J. BENKO: "Measurements of
the relative molecular weight of lignosulfonates by
diffusion"

Die Akte enthält technische Angaben, die nach
dem Eingang der Anmeldung eingereicht wurden
und die nicht in dieser Patentschrift enthalten sind.

LIBER, STOCKHOLM 1989

## Beschreibung

Die Erfindung bezieht sich auf ein Verfahren zur Herabsetzung der Schleimbildung in Anlagen, in denen Wasser im Kreislauf geführt wird, wobei dem Wasser ein Lignosulfonat zugesetzt wird.

Bei der bei Papiermaschinen zunehmend praktizierten Kreislaufschließung des Siebwassers finden Mikroorganismen durch das im Siebwasser vorhandene hohe organische und anorganische Nährstoffangebot und ideale Bedingungen, wie erhöhte Temperatur, pH-Wert und Sauerstoffgehalt, exponentielle Wachstumsmöglichkeiten. Das übermäßige Wachsen der Mikroorganismen hat jedoch eine entsprechend hohe Schleimbildung an den Wänden der Anlageteile, wie Leitungen, Behälter und Pumpen, der zur Kreislaufführung des Siebwassers verwendeten Anlage zur Folge. Beim Lösen der Schleimteile von den Wänden führt dies zur Bildung von Batzen und Löchern in der Papierbahn. Dadurch wird die Papierbahn geschwächt, d. h. es kann zu Abrissen der Papierbahn und damit Maschinenstillständen kommen. Um diese Schleimbildung zu verhindern, ist es bekannt, dem Siebwasser Biozide zuzusetzen. Dabei werden die die Schleimbildung bewirkenden Bakterien vernichtet. Neben den Bakterien treten im Siebwasser jedoch auch Pilze auf, wobei sich gezeigt hat, daß die Pilzbildung insbesondere dann zunimmt, wenn die Bakterienpopulation zurückgeht. Bei dem bekannten Verfahren wird deshalb auch noch ein Fungizid, beispielsweise Pentachlorphenol, dem Siebwasser zugesetzt. Das bekannte Verfahren, das auch als "Total Kill"-Verfahren bezeichnet wird, ist daher nicht nur mit erheblichen Kosten behaftet, sondern führt auch zu einer erheblichen Umweltbelastung.

Nach US-A-2 551 446 wird zur Verhinderung des Wachstums von Mikroorganismen in Wasser ein Kupfersalz, z. B. Kupfersulfat verwendet. Um das Ausfällen des Kupfersalzes zu verhindern, bedient man sich eines Lignosulfonates als Komplexbildner.

Aus CA-A-807 123 ist es bekannt, halogenierte Levulinsäure als Biozid einzusetzer. Da halogenierte Levulinsäure in Wasser nur schwer löslich ist, werden Ligninsulfonsäure und Dimethylsulfoxid als Dispergiermittel eingesetzt. Aus "Das österreichische Papier" 20, Nr. 9, 34 bis 35 ist es bekannt, dem Siebwasser einer Papiermaschine ein Lignosulfonat zuzusetzen, und zwar zusammen mit einem Biozid, allerdings in einer geringeren Menge als bei dem vorstehend erörterten "Total Kill"-Verfahren.

Dabei wird angenommen, daß das Lignosulfonat durch elektrostatischen Ladungsausgleich die als Nahrungsbrücke zum Kreislaufsystem wirkenden Stoffwechselprodukte (Pentosane) neutralisiert und damit für die Nahrungszufuhr funktionsunfähig macht. Auf diese Weise wird die bakterielle Aktivität gesteuert und damit auch der Pilzbefall. In dem erwähnten Artikel aus "Das österreichische Papier" ist angegeben, daß als biologischer Komplexbildner ein "speziell ausgewähltes und modifiziertes Lignosulfonat" zum Einsatz kommt. Um welches "speziell ausgewähltes und modifiziertes Lignosulfonat" es sich dabei handelt, geht aus diesem Artikel jedoch nicht hervor.

Es sind Versuche mit handelsüblichen Lignosulfonaten durchgeführt worden. Es hat sich jedoch herausgestellt, daß diese Lignosulfonate ohne jegliche Wirksamkeit sind. D.h., die Schleimbildung erfolgt an den Wänden der Anlagenteile der Anlage zur Kreislaufführung des Siebwassers praktisch genau so schnell, wie ohne Zugabe dieser im Handel befindlichen Lignosulfonate.

Nach der Erfindung tritt der erwähnte Effekt des Lignosulfonats als biologischer Komplexbildner jedoch völlig überraschend dann auf, wenn das zugesetzte Lignosulfonat im Mittel ein Molekulargewicht von 4000 bis 7000 (Gewichtsmittel) bzw. von 2000 bis 3000 (Zahlenmittel) aufweist, und das Lignosulfonat in einer Menge von 0,1 bis 1,0 g pro $m^3$ Wasser zugesetzt wird.

Vorzugsweise beträgt das Molekulargewicht des erfindungsgemäß zugesetzten Lignosulfonats im Gewichtsmittel etwa 5600 und im Zahlenmittel etwa 2300.

Die Viskosität des erfindungsgemäßen Lignosulfonates beträgt dabei in wässriger Lösung bei 25°C und einer Feststoffkonzentration von 52 % lediglich 4 cPas (40 cps).

Demgegenüber besitzen die im Handel befindlichen Lignosulfonate eine erheblich höhere Viskosität, nämlich z. B. bei 20°C und einem Feststoffgehalt von 46 % eine Viskosität von 35 cPas (350 cps) oder bei 20°C und einem Feststoffgehalt von 53 % von 40 cPas (400 cps).

Es ist deshalb anzunehmen, daß dieses völlig unterschiedliche Verhalten der im Handel befindlichen Lignosulfonate gegenüber dem bei dem erfindungsgemäßen Verfahren eingesetzten Lignosulfonat auf das erheblich geringere mittlere Molekulargewicht des bei dem erfindungsgemäßen Verfahren eingesetzten Lignosulfonats zurückzuführen ist, das sich in der geringeren Viskosität ausdrückt.

Weitere Charakteristika des erfindungsgemäß zum Einsatz kommenden Lignosulfonats bestehen darin, daß es ein Sulfit-Ablauge-Produkt aus einem Holz ist, das zumindest teilweise aus Nadelholz besteht, wobei dieses Produkt einen geringeren Anteil von reduzierenden Zuckern von höchstens 1,0, vorzugsweise höchstens 0,5 Gewichtsprozent, da reduzierende Zucker das Wachstum der Mikroorganismen unterstützen und einen Anteil an Oligosacchariden mit 3 bis 5 Pentose- und/oder Hexoseeinheiten von 25 bis 40, vorzugsweise 30 bis 35 Gewichtsprozent, aufweist. Der Sulfonierungsgrad des Lignins des Lignosulfonats beträgt 1,2 bis 1,5, vorzugsweise etwa 1,3, der Sulfatschwefelgehalt maximal 0,9 %, der Gehalt an organisch gebundenem Schwefel 5 bis 6 %, der Calciumgehalt des Produkts maximal 0,5 %, der Gehalt an Methoxylgruppen 5,5 bis 6,0 % und der Natriumgehalt 10 bis 12 %. Der pH-Wert einer 3-%-igen wässrigen Lösung des Produkts beträgt 8,0 bis 8,5.

Das Lignosulfonat wird bei dem erfindungsgemäßen Verfahren in einer Konzentration von 0,1 g bis 1,0 g pro m³ Wasser eingesetzt, d.h. im Siebwasser von Papiermaschinen in einer Konzentration von 20 bis 200 g pro Tonne Papier, da die Papierstoffkonzentration in dem auf das Sieb der Papiermaschine aufgebrachten Brei etwa 0,5 Gewichtsprozent beträgt.

Das Lignosulfonat wird dabei kontinuierlich zudosiert. Bei dem erfindungsgemäßen Verfahren kann ferner ein Biozid zugesetzt werden. Die zugesetzte Biozidmenge beträgt jedoch weniger als die Hälfte, normalerweise höchstens 1/10 der bei dem vorstehend erwähnten "Total Kill"-Verfahren eingesetzten Biozidmenge. Das Biozid wird dabei periodisch zugegeben, wobei die Dauer des Biozidzusatzes 4 bis 50 % der Dauer des Lignosulfonat-Zusatzes beträgt. D.h., bei ganztägigem, also 24-stündigem kontinuierlichem Lignosulfonat-Zusatz wird insgesamt 1 bis 12 Stunden lang Biozid zugesetzt, und zwar in Intervallen, wobei die einzelnen Intervalle 1/2 bis 8 Stunden betragen können.

Als Biozid werden eine oder mehrere organische Schwefel-Stickstoffverbindungen oder organische Bromstickstoffverbindungen verwendet, z. B. Methylen-bis-thiocyanat oder Carbamate oder 2,2-Dibrom-2-cyanoacetamid oder 3,5-Dimethyl-1,3,5-2H-Tetrahydrothiadiazin-2-thion.

**Patentansprüche**

1. Verfahren zur Herabsetzung der Schleimbildung in Anlagen, in denen Wasser im Kreislauf geführt wird, wobei dem Wasser ein Lignosulfonat zugesetzt wird, dadurch gekennzeichnet, daß das zugesetzte Lignosulfonat im Mittel ein Molekulargewicht von 4000 bis 7000 (Gewichtsmittel) bzw. von 2000 bis 3000 (Zahlenmittel) aufweist und das Lignosulfonat in einer Menge von 0,1 bis 1,0 pro m³ Wasser zugesetzt wird.

2. Verfahren nach Anspruch 1, dadurch gekennzeichnet, daß das zugesetzte Lignosulfonat in Form eines Sulfit-Ablauge-Produkts zugesetzt wird, dessen Anteil an reduzierenden Zuckern höchstens 1,0 Gew.-% beträgt.

3. Verfahren nach Anspruch 2, dadurch gekennzeichnet, daß das zugesetzte Sulfit-Ablauge-Produkt einen Anteil an Oligosacchariden mit 3 bis 5 Pentose- und/oder Hexose-Einheiten von 25 bis 40 Gew.-% enthält.

4. Verfahren nach einem der Ansprüche 1 bis 3, dadurch gekennzeichnet, daß der Sulfonierungsgrad des Lignins des zugesetzten Lignosulfonats 1,2 bis 1,5 beträgt.

5. Verfahren nach einem der vorstehenden Ansprüche, dadurch gekennzeichnet, daß das zugesetzte Lignosulfonat bzw. Sulfit-Ablauge-Produkt aus einem Holz hergestellt wird, das zumindest teilweise aus Nadelholz besteht.

6. Verfahren nach einem der vorstehenden Ansprüche, dadurch gekennzeichnet, daß zusätzlich ein Biozid in einer Menge von 0,01 bis 2,0 g pro Tonne Wasser eingesetzt wird.

7. Anwendung des Verfahrens nach einem der vorstehenden Ansprüche zur Herabsetzung der Schleimbildung in einer Anlage, mit der das Siebwasser von Papiermaschinen im Kreislauf geführt wird.

**Claims**

1. A method of reducing the formation of slime in plants in which water is circulated, a lignosulfonate being added to the water, characterized in that the added lignosulfonate has a mean molecular weight of 4000 to 7000 (weight average) or of 2000 to 3000 (number average) and the lignosulfonate is added in an amount of 0.1 to 1.0 g per m³ of water.

2. The method of claim 1, characterized in that the added lignosulfonate is added in the form of a sulfite waste liquor product whose proportion of reducing sugars is at most 1.0 wt.-%.

3. The method of claim 2, characterized in that the added sulfite waste liquor product has a proportion of oligosaccharides with 3 to 5 pentose and/or hexose units of 25 to 40 wt.-%.

4. The method of any of claims 1 to 3, characterized in that the sulfonation degree of the lignin of the added lignosulfonate is 1.2 to 1.5.

5. The method of any of the above claims, characterized in that the added lignosulfonate or sulfite waste liquor product is made from a wood consisting at least partly of softwood.

6. The method of any of the above claims, characterized in that a biocide is additionally used in an amount of 0.01 to 2.0 g per ton of water.

7. The use of the method of any of the above claims for reducing the formation of slime in a plant that circulates the wire water of paper machines.

**Revendications**

1. Procédé pour réduire le dépôt mucilagineux dans des installations dans lesquelles l'eau est envoyée en circuit fermé, dans lequel un lignosulfonate est ajouté à l'eau, caractérise en ce que le lignosulfonate ajouté présente en moyenne une masse moléculaire de 4000 à 7000 (moyenne en poids) ou de 2000 à 3000 (moyenne en nombre) et en ce que le lignosulfonate est ajouté dans une quantité de 0,1 à 1,0 g/m³ d'eau.

2. Procédé suivant la revendication 1, caractérisé en ce que le lignosulfonate ajouté est ajouté sous la forme d'un produit de lessivage par le sulfite, dont la proportion de sucres réducteurs est de 1,0 % en poids au maximum.

3. Procédé suivant la revendication 2, caractérisé en ce que le produit de lessivage par le sulfite ajouté contient une proportion d'oligosaccharides contenant 3 à 5 motifs pentose et/ou hexose de 25 à 40 % en poids.

4. Procédé suivant l'une des revendications 1 à 3, caractérisé en ce que le degré de sulfonation de la lignine du lignosulfonate ajouté est de 1 ,2 à 1,5.

5. Procédé suivant l'une des revendications précédentes, caractérisé en ce que le lignosulfonate ou le produit de lessivage par le sulfite ajouté est préparé à partir d'un bois qui est constitué au moins partiellement de résineux.

6. Procédé suivant l'une des revendications précédentes, caractérisé en ce que l'on utilise en outre un biocide dans une quantité de 0,01 à 2,0 g par tonne d'eau.

7. Utilisation du procédé suivant l'une des revendications précédentes pour réduire la formation de dépôt mucilagineux dans une installation avec laquelle l'eau filtrée des machines à papier est envoyée en circuit fermé.